# EUROPEAN PATENT APPLICATION

(11) **EP 4 280 633 A1**
(43) Date of publication of application: **22.11.2023**
(21) Application number: 22174294.3
(22) Date of filing: 19.05.2022
(51) Int. Cl.: H04W 4/14, H04W 4/90

(54) **EMERGENCY MESSAGE HANDLING**

(71) Applicant: Vodafone GmbH, 40549 Düsseldorf (DE)
(72) Inventor: Kulakov, Alexej, 40595 Düsseldorf (DE); Broszeit, Marco, 40235 Düsseldorf (DE); Lu, Yang, 40489 Düsseldorf (DE); Wild, Peter, 47807 Krefeld (DE)
(74) Representative: Weisbrodt, Bernd

(57) **Abstract**

The present solution provides a method performed in a wireless communication network, the method comprising: transmitting, from a user equipment, UE (10), a message to the wireless communication network, wherein the message comprises an indicator indicating an emergency; processing, by the wireless communication network, the message comprising the indicator; and prioritizing, by the wireless communication network, the message among other messages.

## Description

The present solution concerns an improved processing of emergency related messages in a wireless communication network.

Nowadays, the Short Message Service (SMS) is widely used for access to emergency services and for the provision of caller location information.

For example, a user equipment (UE) that is roaming in a visited network may encounter an emergency. In this case, after the UE generates an SMS message associated with an emergency call, a Mobile-services Switching Centre (MSC) will be responsible to route this SMS message to a Short Message Service Centre (SMSC) in the visited network. Said SMSC will deliver location information to a Public Safety Answering Point (PSAP) responsible for the visited network. In order to ensure a highest priority handling with always-available network resources in the network, wherein said network includes a Radio Access Network (RAN) and a Core Network (CN), for an emergency call, it is desirable that the importance of the emergency SMS can be reliably detected by all components in the network.

However, such high-priority handling of a SMS messages does not exist in current networks, neither in the RAN nor in the CN. This is the case because the UE does not provide any emergency information associated with the to-be-sent SMS message today.

In view of this, a solution is required, which allows to guarantee a highest priority handling in the network.

Addressing this problem, the present disclosure suggests, according to a first embodiment, a method performed in a wireless communication network, the method comprising: transmitting, from a user equipment (UE), a message to the wireless communication network, wherein the message comprises an indicator indicating an emergency; processing, by the wireless communication network, the message comprising the indicator; and prioritizing, by the wireless communication network, the message among other messages.

In other words, a UE may send and receive e.g. emergency SMS (eSMS) messages with a dedicated indication of the emergency that applies to all mobile network generations including, but not limited to, 2G, 3G, 4G and 5G.

According to a preferred embodiment, the indicator is a message type indicator. This advantageously allows to re-use a parameter that is already defined in corresponding telecommunication standards, e.g. in 3GPP TS 23.040. Accordingly, the impact on current implementations is kept low.

Advantageously, a 2-bit field represents the indicator. This will keep impact on current implementations low as well. For example, the 2-bit field may be located within the first two bits (i.e. bit 0 and bit 1) of a first octet of all Packet Data Units (PDUs) in a message sent using the SMS.

According to another preferred embodiment, the indicator is a special cause value. A special cause value enables the network to easily identify whether an emergency case is given.

According to a preferred embodiment, the special cause value is included in a message 3-message, also called Msg3 or MSG3 respectively Msg3-message or MSG3-message. According to another preferred embodiment, the special cause value is included in a Radio Resource Control (RRC) message, preferably in any first RRC message, especially RRC Establishment Request (RRC ER), RRC-Resume or RRC-re-establishment, more preferably RRC Connection Request (RRC CR) Message, preferably according to 3GPP TS 36.331.

An RRC according to the present invention advantageously comprises the following requests with regard to a change of status:
- Change status of UE from "idle" to "connection established" via RRC connection request (RRC CR);
- Change status of UE from "suspended" to "connection established" via RRC connection resume request;
- Change UE form "inactive" to "connection established" via RRC connection resume request;
- Change status according to a RRCEarlyDataRequest, resulting in a RRC connection Setup complete, connection established; or
- RRC Setup Request according to 3GPP TS 38.331.

This is hereafter further referred to as message 3 (Msg3). Advantageously Msg3, preferably always and in all technologies, provides room for UE identifier and cause values that tell NB what UE wants to get into the network for and NB can then send message 4 (Msg4), that means RRCSetup to UE either faster or slower, or reject.

After performing a random access procedure, especially with a RRC Establishment Request or a RRC Connection Request (RRC CR), the respective message is the first message transmitted from the UE to the network and hence, the information that the message pertains to an emergency is provided at the earliest possible point in time.

Advantageously, the wireless communication network is a telecommunication network according to the 2G, 3G, 4G or 5G standard.

Preferably, the message is transmitted in accordance with a Short Message Service (SMS).

In another advantageous embodiment, the processing comprises: requesting, on a network layer of the wireless communication network, particularly a non-access stratum (NAS) layer, an RRC layer to establish an RRC connection; providing the indicator in an RRC establishment cause; and starting, by the RRC layer, an initial access procedure on a Random Access Channel (RACH) that has been broadcast by a Radio Access Network (RAN) of the wireless communication network. For example, an SMS application layer informs the NAS layer by providing an indication of an emergency and the eSMS message body with an emergency SMS type indication and the NAS layer requests the RRC layer to establish the RRC connection by providing the indicator of the emergency in the RRC establishment cause. Upon receiving this RRC establishment request, the RRC layer starts with e.g. 'Initial access from RRC_IDLE' on the RACH.

According to another preferred embodiment, the method further comprises: receiving, by the RAN, the RACH; and starting a prioritization of radio resources based on the indicator. That is, when the RAN receives the RACH (i.e. the so-called message 1 in 3GPP RRC specifications), the RAN starts with prioritization of radio resources by taking the emergency indication into account, such that a differentiation of eSMS and other services can be provided by the network. When the CN receives an eSMS message body embedded in said RRC message, the CN will realize that it is an eSMS by checking the emergency SMS type indication in the SMS message body. This may be done, for example, by identifying that the parameter TP-MTI is set to '11'.

Preferably, the radio resources are resources related to time, frequency and/or code domain.

According to another embodiment, the indicator enables a prioritizing on transport layer level.

According to a second embodiment, the present invention provides a system comprising: a user equipment (UE), which is configured to transmit a message to a wireless communication network, wherein the message comprises an indicator indicating an emergency; and the wireless communication network, which is configured to process the message comprising the indicator and to prioritize the message among other messages.

According to a third embodiment, the present invention provides a user equipment (UE) comprising: a transceiver; and a processor operably coupled to the transceiver and configured to transmit a message to a wireless communication network, wherein the message comprises an indicator indicating an emergency.

According to a fourth embodiment, the present invention provides a base station (BS) comprising: a transceiver; and a processor operably coupled to the transceiver and configured to: receive, from a user equipment, UE, a message comprising an indicator indicating an emergency; and process the message by transmitting, to a core network, a second message comprising the indicator, wherein the second message allows the core network to prioritize the message among other messages.

Further details, features and advantages of the present invention are explained in more detail below with reference to the embodiments shown in the figures of the drawings.

Therein:
- Fig. 1: represents the currently implemented handling for the provision of caller location information using SMS-based emergency services according to the prior art; and
- Fig. 2: represents an exemplary embodiment of an improved emergency message handling according to the claimed solution.

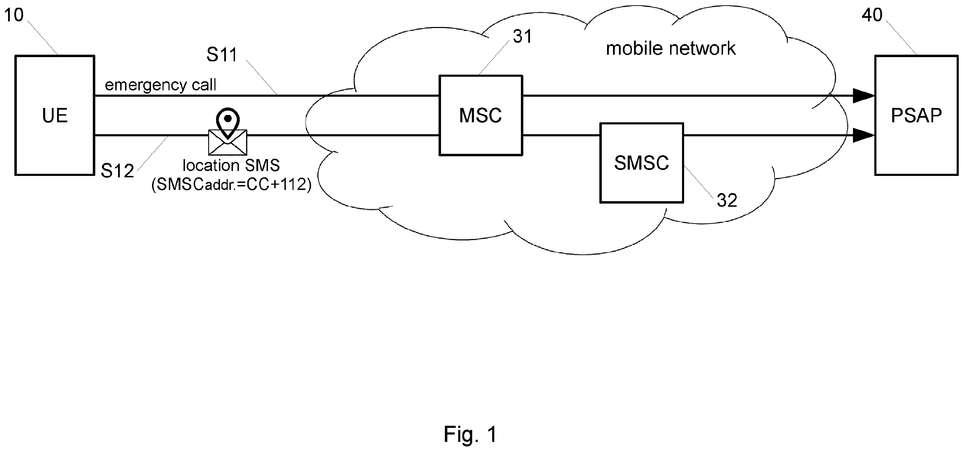

According to step S11 in Fig. 1, a User Equipment (UE) 10 may perform an emergency call to a Public Safety Answering Point (PSAP) 40 via Mobile-services Switching Centre (MSC) 31. Therein, the MSC 31 is part of a mobile network which can be the home network or a visited network. In Fig. 1 the MSC 31 is part of a visited network, for example. Alternatively, processing may also happen in a home network.

In order to provide the PSAP 40 with information about the location of the UE 10, a location SMS may be provided to the PSAP 40 as well, which is indicated in step S12. The provision of the location SMS is performed via the MSC 31 and via an SMSC 32, which is also arranged in the mobile network (home network or visited network). In Fig. 1 the SMSC 32 is part of a visited network. Alternatively, processing may also happen in the home network. When the UE 10 generates such SMS message associated with the emergency call, the MSC 31 will be responsible to route the SMS message to the visited SMSC 32.

Subsequently, the SMSC 32 will deliver location information to the corresponding PSAP 40 that is responsible for the visited network. The location SMS sent in step S12 is based on the address of the SMSC 32, which corresponds to the respective country code (CC) and the number 112, for example.

However, the currently implemented handling does not allow that an emergency SMS message is prioritized when passing the visited network, e.g. the RAN (comprising a BS; not shown) as well as the CN (comprising MSC 31 and SMSC 32) of the same.

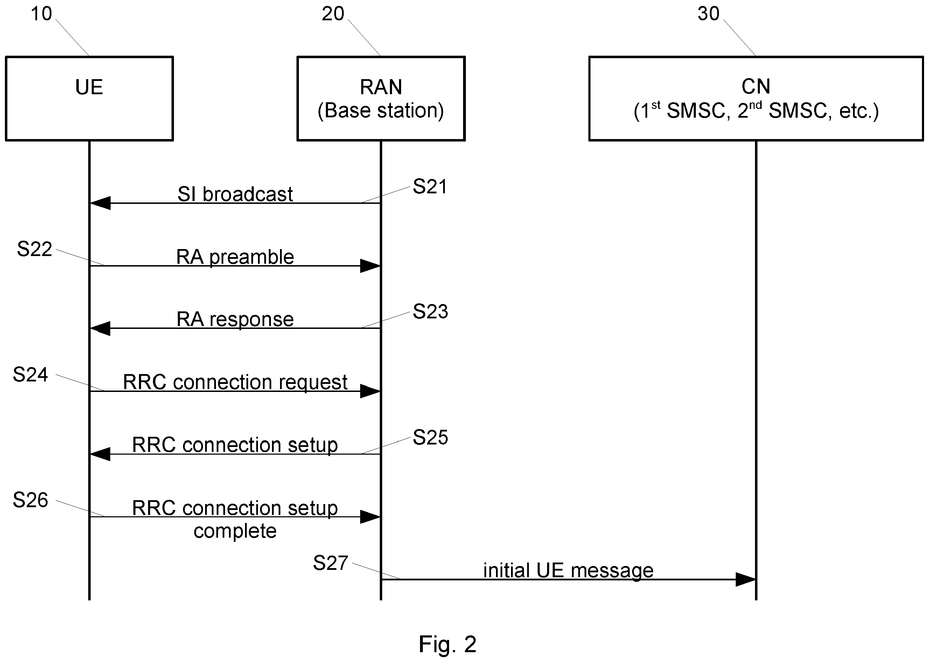

Fig. 2 represents an exemplary embodiment of an improved emergency message handling according to the present invention. In step S21, the RAN 20 of the network broadcasts, via a base station (BS), system information to a UE 10.

Subsequently, the UE 10 transmits a random access (RA) preamble towards the network, more particularly to the BS of the Radio Access Network (RAN) 20, which is illustrated in step S22. This message may also be referred to, using 3GPP terminology, as a first message or simply 'Msg1'. In reply to that, an RA response is sent to the UE 10, as shown in step S23. This may also be referred to, using 3GPP terminology, as a second message or simply 'Msg2'. The purpose of the RA process is, inter alia, to obtain a resource for subsequent 'Msg3'.

Hence, after the RA procedure has been completed, the UE 10 transmits a third message to the wireless communication network, wherein the message comprises an indicator indicating an emergency. This is illustrated in step S24. Said message may be a Radio Resource Control (RRC) connection request, which provides the indicator in an RRC establishment cause. For example, there may be a new cause value 'emergency SMS' or the like.

After that, the network replies e.g. with an RRC connection setup message, which might also be referred to as 'Msg4'. This is illustrated in step S25.

In order to complete resource allocation, the UE 10 transmits, for example, an RRC connection setup complete message to the network as shown in step S26. In this fifth message, the Packet Data Units (PDUs) indicate, on network layer (i.e. on non-access stratum; NAS) level that an emergency SMS may be given. This can be done using a specific value for a message type indicator, which corresponds to the emergency SMS type.

The subsequent communication pertains to a processing between the RAN 20 and a Core Network (CN) 30, wherein the CN 30 comprises at least one Short Message Service Centre (SMSC). In detail, in step S27, the RAN 20 transmits e.g. an 'INITIAL UE Message' to the CN 30, wherein said message comprises the NAS PDU set to 'emergency SMS', thus indicating that the message shall be handled prioritized. Based on this, the network is enabled to prioritize the message among other messages. This can be done, for example, using Differentiated Services Code Point (DSCP) marking on the Internet layer or using P-bits on the data link layer. Hence, the routing inside the wireless communication network, particularly to the responsible SMSC, can be accelerated.

The embodiments shown in the figures of the drawing and the embodiments explained in connection therewith, particularly the examples of messages in Fig. 2, serve only to explain the presented solution and are not limiting for the same.

### Reference signs:

- 10: User Equipment (UE)
- 20: Radio Access Network (RAN; e.g. Base Station)
- 30: Core Network (CN)
- 31: Mobile-services Switching Centre (MSC; part of CN)
- 32: Short Message Service Centre (SMSC; part of CN)
- 40: Public Safety Answering Point (PSAP)

- S11 to S12: Method steps
- S21 to S27: Method steps

## Claims

1. A method performed in a wireless communication network, the method comprising:
transmitting, from a user equipment, UE (10), a message to the wireless communication network, wherein the message comprises an indicator indicating an emergency;
processing, by the wireless communication network, the message comprising the indicator; and
prioritizing, by the wireless communication network, the message among other messages.

2. The method according to claim 1, wherein the indicator is a message type indicator.

3. The method according to any one of claims 1 or 2, wherein a 2-bit field represents the indicator.

4. The method according to any one of claims 1 to 3, wherein the indicator is a special cause value.

5. The method according to claim 4, wherein the special cause value is included in a message 3-message, Msg3-message, preferably wherein the special cause value is included in a Radio Resource Control, RRC, more preferably in any first RRC message, especially RRC Establishment Request (RRC ER), RRC-Resume or RRC-re-establishment, more preferably a message according to RRC connection resume request, RRC Connection Request (RRC CR) (S24), RRCEarlyDataRequest, or RRC Setup Request.

6. The method according to any one of claims 1 to 5, wherein the wireless communication network is a telecommunication network according to the 2G, 3G, 4G or 5G standard.

7. The method according to any one of claims 1 to 6, wherein the message is transmitted in accordance with a Short Message Service, SMS.

8. The method according to any one of claims 1 to 7, wherein the processing comprises:
requesting (S24), on a network layer of the wireless communication network, particularly a non-access stratum, NAS, layer, an RRC layer to establish an RRC connection;
providing the indicator in an RRC establishment cause; and
starting (S27), by the RRC layer, an initial access procedure on a Random Access Channel, RACH, that has been broadcast by a Radio Access Network, RAN (20), of the wireless communication network.

9. The method according to claim 8, further comprising:
receiving, by the RAN (20), the RACH; and
starting a prioritization of radio resources based on the indicator.

10. The method according to claim 9, wherein the radio resources are resources related to time, frequency and/or code domain.

11. The method according to any one of claims 1 to 10, wherein the indicator enables a prioritizing on transport layer level.

12. A system comprising:
a user equipment, UE (10), which is configured to transmit a message to a wireless communication network, wherein the message comprises an indicator indicating an emergency; and
the wireless communication network, which is configured to process the message comprising the indicator and to prioritize the message among other messages.

13. A user equipment, UE (10), comprising:
a transceiver; and
a processor operably coupled to the transceiver and configured to transmit a message to a wireless communication network, wherein the message comprises an indicator indicating an emergency.

14. A base station, BS, comprising:
a transceiver; and
a processor operably coupled to the transceiver and configured to:
receive, from a user equipment, UE (10), a message comprising an indicator indicating an emergency; and
process the message by transmitting, to a core network, a second message comprising the indicator, wherein the second message allows the core network to prioritize the message among other messages.
